# EUROPEAN PATENT APPLICATION

(11) **EP 4 362 312 A1**
(43) Date of publication of application: **01.05.2024**
(21) Application number: 22213677.2
(22) Date of filing: 15.12.2022
(51) Int. Cl.: H02M 7/487

(54) **MULTILEVEL SINGLE-PHASE DIODE-CLAMPED VOLTAGE INVERTER HAVING A MINIMIZED NUMBER OF TRANSISTORS**

(30) Priority: 27.10.2022 PL 44265622
(71) Applicant: Akademia Gorniczo-Hutnicza im. Stanislawa Staszica w Krakowie, 30-059 Krakow (PL)
(72) Inventor: Stala, Robert, 30-221 Kraków (PL)
(74) Representative: Wlasienko, Jozef

(57) **Abstract**

The subject of the invention is a multilevel single-phase diode-clamped voltage inverter having a minimized number of transistors, enabling multilevel modulation of output voltage, created by modifying a classic NPC-type inverter. The modification of a classic solution of the diode-clamped NPS system has been implemented by adding an additional system composed of a capacitive divider constituting a serial connection of capacitors C3 and C4 and two legs, each including one bidirectional controlled switch (S9 and S10), that connect a common connection point of the capacitors C3 and C4 to individual phase legs of the NPC inverter. The inverter according to the invention is implemented in four versions. In a first and a second version, the capacitive divider of the additional system replaces one of the capacitors of the input divider of the NPC inverter, and in a third and a fourth version it is connected in parallel to one of the capacitors of the input divider of the NPC inverter. The voltage between the phases of the system, which is the voltage difference of two legs of the system, can take values: U_{IN}, 4U_{IN}/3, U_{IN}/2, U_{IN}/4, 0, - U_{IN}/4, - U_{IN}/2, -4 U_{IN}/3, -U_{IN}, that is, at 9 levels.

## Description

The subject of the invention is a multilevel single-phase diode-clamped voltage inverter having a minimized number of transistors, enabling multilevel modulation of output voltage, created by modifying a classic NPC-type inverter.

Single-phase DC-AC converters are used in electrical energy conversion systems, in particular in renewable energy harvesting systems, where it is required to supply a receiver with alternating voltage, as well as in single-phase AC drive systems, or in uninterruptible power system (UPS).

One of the most widely used topologies of single-phase multilevel electrical energy converters is a diode-clamped NPC (Neutral Point Clamped) voltage inverter in a H-bridge configuration. Due to the parameters of currently manufactured semiconductor devices (mainly maximum blocking voltage and forward current), high reliability and a relatively simple construction, a single-phase three-level topology is most often used in industrial applications. The implementation of the NPC system with a higher number of levels is possible with the provision of additional measures to ensure an even distribution of the input voltage on capacitors on the DC voltage side. As the number of levels of a given inverter, a number of voltage steps (voltage levels) is to be understood that are possible to be generated by means of a single phase leg.

One of the development directions of the voltage inverters is to increase the number of modulation levels of their output voltage. The possibility of generating a higher number of voltage steps by means of a single phase leg of the inverter improves its operation in the field of mapping the input DC voltage in the form of an output sinusoidal alternating voltage.

In the classic topologies this is achieved by increasing the number of system elements. In the single-phase diode-clamped NPC inverter system, the increase in the number of modulation levels of the output voltage requires the use of a topology having a larger number of transistors and diodes.

A classic NPC system expanded in this way would require the use of 16 transistors and 12 diodes for generating 9 output voltage levels in a single-phase bridge system.

It is advantageous if the increase in the number of system elements corresponding to the increase in the number of output voltage levels is as low as possible. It is also advantageous if the increase in the number of levels can be obtained by increasing the number of system transistors without increasing the number of diodes. In this way, in systems with sufficiently low currents, small losses resulting from the flow of current through semiconductor elements are obtained. By not using additional diodes in the converter system, losses resulting from their switching are avoided.

In the prior art, solutions for adapting the diode-clamped NPC voltage inverter topologies are known for realizing an increased number of modulation levels of their output voltage.

In the article by A. Nabae, I. Takahashi and H. Akagi, "A New Neutral-Point-Clamped PWM Inverter," in IEEE Transactions on Industry Applications, vol. IA-17, no. 5, pp. 518-523, Sept. 1981, a classic topology of the NPC voltage inverter is described, consisting in that the single phase output voltage can take values on three levels by connecting to the positive or negative potential of the input DC voltage, or to the midpoint of the DC voltage divider

The article by M. Schweizer, T. Friedli and J. W. Kolar, "Comparison and implementation of a 3-level NPC voltage link back-to-back converter with SiC and Si diodes," 2010 Twenty-Fifth Annual IEEE Applied Power Electronics Conference and Exposition (APEC), Palm Springs, CA, USA, 2010, pp. 1527-1533, also discloses tests of three-level NPC converters, aimed at improving the efficiency of the converter by using appropriate semiconductor elements.

An NPC system with clamping diodes and four-level legs is disclosed in the article by Stala, R. (2020), Natural DC-link voltage balance in a single-phase NPC inverter with four-level legs and novel modulation method. IET Power Electronics, 13: 3764-3776. https://doi.org/10.1049/iet-pel.2020.0050. In each leg of the system, 6 transistors and four diodes were used, and the presented results prove the possibility of controlling the four-level NPC-type bridge system while maintaining the proper division of the input voltage on the capacitors on the DC side of the system.

From European patent specification EP 2590312 a three-level higher-efficiency NPC inverter is known, the circuit modification of which consists only in adding two switching elements connected in series and connected in parallel to a phase leg and to an input capacitive divider, between a positive input terminal of supply voltage and a negative terminal of this voltage. The leg with the additional switching elements is connected to the phase leg of the inverter in such a way that a connection point of a first switch output and a second switch output of the leg with the additional switching elements is connected to a point connecting the second switch output with a third switch input of the phase leg of the inverter and constitutes an output terminal of the inverter.

US Patent No. 9083230 discloses multilevel converter stages and systems with neutral point terminal, in which the converter stage includes an NPC core circuit, modified with additional capacitive legs.

Multiple inverter stages can be cascaded or combined in various configurations in order to implement single or multi-phase power conversion systems, and higher output voltages can be achieved by forming converter stages into an H-bridge configuration and by connecting multiple H-bridge stages in series with one another.

Obtaining the possibility of an increased number of output voltage levels in the system of a classic single-phase diode-clamped voltage inverter allows for higher efficiency, reduction of losses and, consequently, increase in the output power of the converter and increase in system reliability, reduction of choke inductance and capacitance of capacitors in filters on the alternating voltage side, reduction of interference caused by voltage changes at the output of the inverter and helps to reduce the total harmonic distortion (THD).

The problem of the invention is to modify the classic single-phase diode-clamped voltage inverter in order to convert it into a ninelevel inverter allowing for higher efficiency, reduction of losses and, consequently, increase in the output power of the converter and increase in system reliability, reduction of choke inductance and capacitance of capacitors in filters on the alternating voltage side, reduction of interference caused by voltage changes at the output of the inverter, reduction of the Total Harmonic Distortion (THD). while minimizing the number of transistors used to implement the modernised circuit.

The task of solving the problem of the invention has been solved by modifying the classic single-phase diode-clamped voltage inverter in the system which is the subject of the invention.

A multilevel single-phase diode-clamped voltage inverter, having a minimized number of transistors, comprising an NPC converter core in the form of a DC intermediate circuit comprising at least a first and a second capacity C1 and C2 of equal value, constituting an input capacitive divider arranged between a positive input terminal P and a negative input terminal N, and two circuits for generating output alternating voltage, wherein a first main leg of a first circuit is composed of a serial connection of four controlled electronic switches S1, S2, S3 and S4 and arranged between the positive input terminal P and the negative input terminal N, and an additional leg constituting a serial connection of clamping diodes D1 and D2, wherein a cathode of the diode D1 is connected to a connection point of the controlled electronic switches S1 and S2, and an anode of the diode D2 is connected to a connection point of the controlled electronic switches S3 and S4, wherein a connection point of an anode of the diode D1 and a cathode of the diode D2 is connected to a middle point M of the constant voltage intermediate circuit, located between the capacitors C1 and C2 of the input divider, whereas a connection of the controlled electronic switches S2 and S3 constitutes a point A connected to an output terminal Wy1, and a second circuit for generating output alternating voltage has an identical topology as the first circuit, wherein a main leg of the second circuit is constituted by a serial connection of four controlled electronic switches S5, S6, S7 and S8, and an additional leg is constituted by a serial connection of clamping diodes D3 and D4, wherein an output terminal Wy2 is connected to a point B constituting a connection of the controlled electronic switches S6 and S7, wherein the switches of the inverter are controlled by means of a central control unit, is characterized in that an additional capacitive divider, which is constituted by capacitors C3 and C4 connected in series, is arranged in series with the input capacitor C2, in place of the capacitor C1, between the negative input terminal N and the middle point M of the constant voltage intermediate circuit, located at a connection point of a negative output of the capacitor C2 and a positive input of the capacitor C4. A negative output of the capacitor C3 included in the additional capacitive divider is connected to the negative input terminal N of the supply voltage U_{IN}. Whereas a positive input of the capacitor C3 is connected to a negative input of the capacitor C4, the positive input of which is connected to the negative output of the capacitor C2, constituting the middle point M of the constant voltage intermediate circuit.

Two additional horizontal legs, each containing one bidirectional controlled switch S9 and S10, connect a connection point of the capacitors C3 and C4 to the legs of the single-phase three-level NPC-type inverter. A first leg containing the bidirectional switch S9 composed of transistors T109 and T209, connects the connection point of the capacitors C3 and C4 to a connection point of the switches S3 and S4 and the anode of the diode D2. A second leg containing the bidirectional switch S10 composed of transistors T110 and T210, connects the connection point of the capacitors C3 and C4 to a connection point of the switches S7 and S8 and an anode of the diode D4.

In a second version of the inverter according to the invention, the additional capacitive divider, which is constituted by the capacitors C3 and C4 connected in series, is arranged in series with the input capacitor C1, in place of the capacitor C2, between the positive input terminal P and the middle point M of the constant voltage intermediate circuit located at a connection point of the negative output of the capacitor C3 and a positive input of the capacitor C1. Whereas the two additional horizontal legs, each containing one bidirectional switch S9 and S10, connect the connection point of the capacitors C3 and C4 to the legs of the single-phase three-level NPC-type inverter, wherein the positive input of the capacitor C4 included in the additional capacitive divider is connected to the positive input terminal P of the supply voltage U_{IN}, and the negative input of the capacitor C4 is connected to the positive input of the capacitor C3, the negative input of which is connected to a positive output of the capacitor C1, constituting the middle point M of the constant voltage intermediate circuit. Whereas the connection point of the capacitors C3 and C4 is connected to the connection point of the switches S1 and S2 and the cathode of the diode D1 through the first horizontal leg containing the bidirectional switch S9 composed of the transistors T109 and T209, and to a connection point of the switches S5 and S6 and a cathode of the diode D3 through the second horizontal leg containing the bidirectional switch S10 composed of the transistors T110 and T210.

In a third version of the inverter according to the invention, the additional capacitive divider, which is constituted by the capacitors C3 and C4 connected in series, is arranged in parallel with the input capacitor C1 between the middle point M of the constant voltage intermediate circuit located between the capacities C1 and C2 and the negative input terminal N of the supply voltage U_{IN}, wherein the positive input of the capacitor C4 is connected to the middle point M of the constant voltage intermediate circuit, and the positive input of the capacitor C3 is connected to the negative input of the capacitor C4, while the negative input thereof is connected to the negative input terminal N of the supply voltage U_{IN}. Whereas the two additional horizontal legs, each containing one bidirectional switch S9 and S10, connect the connection point of the capacitors C3 and C4 to the legs of the single-phase three-level NPC-type inverter, so that the connection point of the capacitors C3 and C4 is connected to the connection point of the switches S3 and S4 and the anode of the diode D2 through the first horizontal leg containing the bidirectional switch S9 composed of the transistors T109 and T209, and to the connection point of the switches S7 and S8 and the anode of the diode D4 through the second horizontal leg containing the bidirectional switch S10 composed of the transistors T110 and T210.

In a fourth version of the inverter according to the invention, the additional capacitive divider, which is constituted by the capacitors C3 and C4 connected in series, is arranged in parallel with the input capacitor C2 between the middle point M of the constant voltage intermediate circuit located between the capacities C1 and C2 and the positive input terminal P of the supply voltage U_{IN}, wherein the positive input of the capacitor C4 is connected to the positive input terminal P of the supply voltage U_{IN}, and the negative input of the capacitor C4 is connected to the positive input of the capacitor C3, the negative input of which is connected to the middle point M of the constant voltage intermediate circuit. Whereas the two legs, each containing one bidirectional switch S9 and S10, connect the connection point of the capacitors C3 and C4 to the legs of the single-phase three-level NPC-type inverter, so that the connection point of the capacitors C3 and C4 is connected to the connection point of the switches S1 and S2 and the cathode of the diode D1 through the first horizontal leg containing the bidirectional switch S9 composed of the transistors T109 and T209, and to the connection point of the switches S5 and S6 and the cathode of the diode D3 through the second horizontal leg containing the bidirectional switch S10 composed of the transistors T110 and T210.

It is preferred when in the inverter according to the invention each of the bidirectional switches S9 and S10 constitutes a set of two transistors, the transistors T109 and T209 in the switch S9, and the transistors T110 and T210 in the switch S10, respectively, connected oppositely by connecting sources of both transistors of each set in case of using MOSFET or GaN transistors, and emitters in case of using IGBT transistors. Whereas an input of each of the bidirectional switches is a drain of a first transistor, and an output of a switch is a drain or a collector of a second transistor of a set.

It is also preferred when each of the bidirectional switches S9 and S10 is a dual-gate GaN transistor, T309 and T310, respectively (GaN transistor with bidirectional conduction and blocking) .

An advantageous effect of using the multilevel diode-clamped voltage inverter having a minimized number of transistors according to the invention is the possibility of implementing nine levels of output voltage. The multilevel circuit allows to obtain a more sinusoidal shape of the output voltage curve than the three-level circuit. The inverter according to the invention allows to obtain a higher efficiency, reduction of the total harmonic distortion (THD), reduces the size of filters. On the other hand, reducing the number of transistors simplifies the control system and increases the efficiency of using the inverter according to the invention in systems connecting sources with variable electrical parameters to a power system.

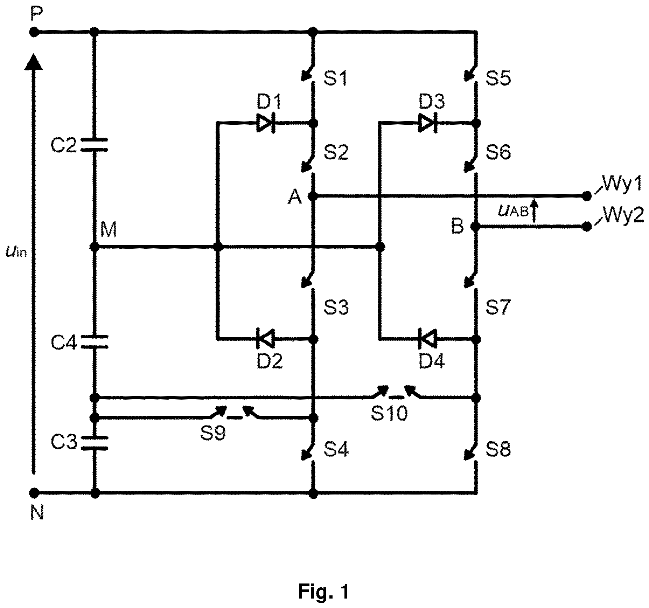

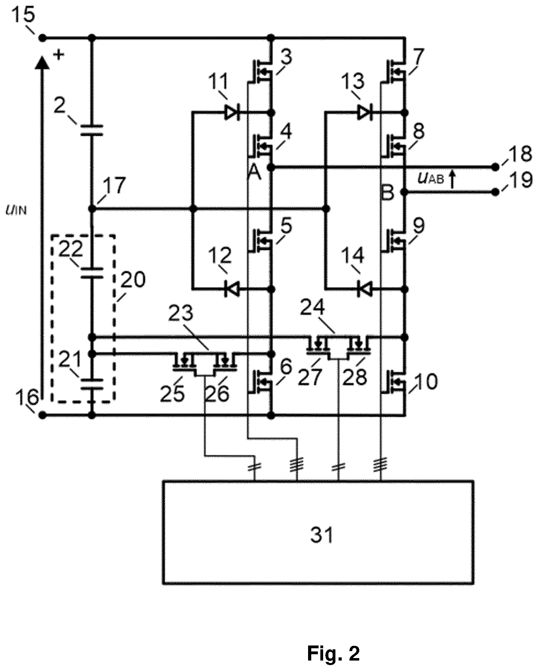

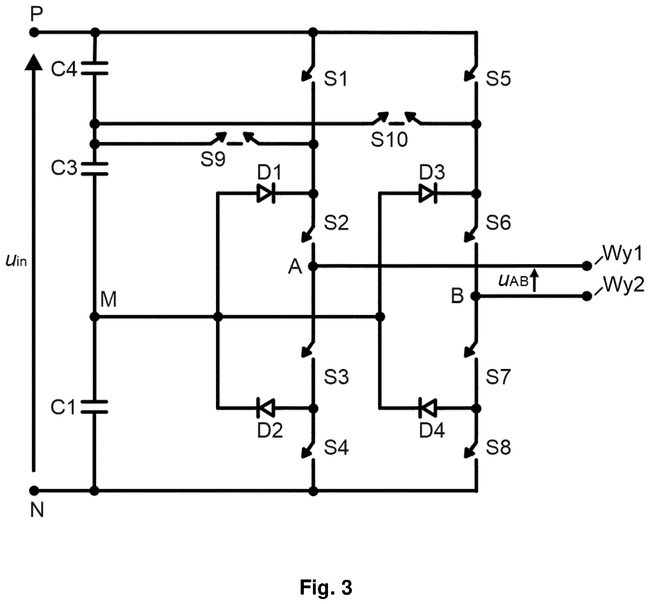

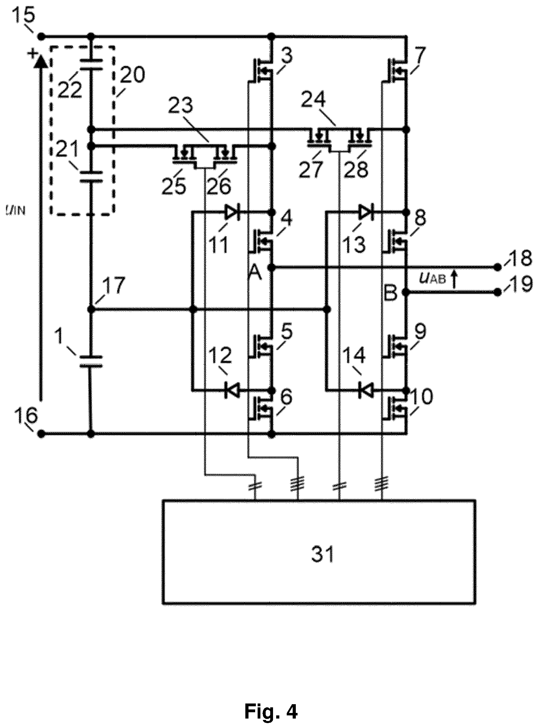

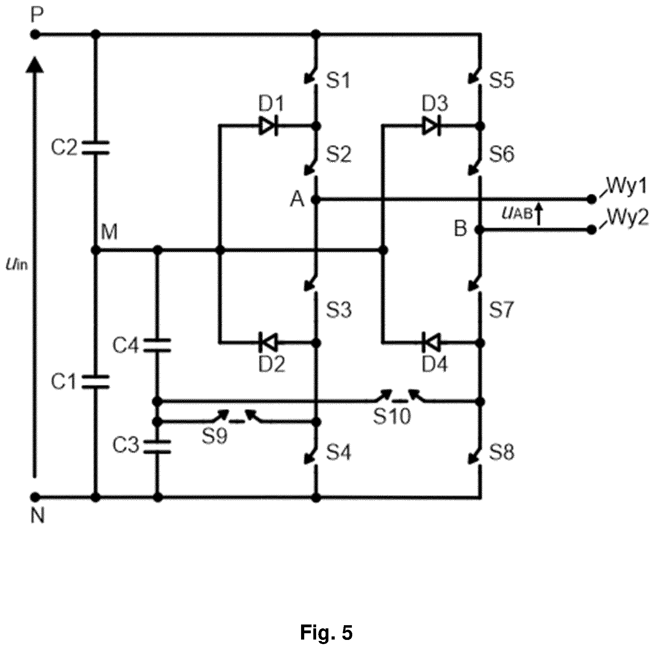

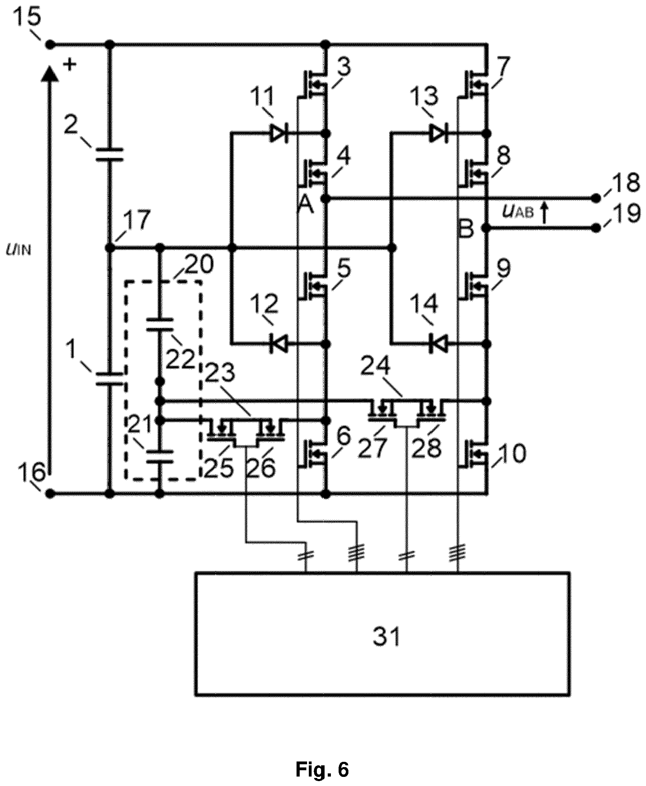

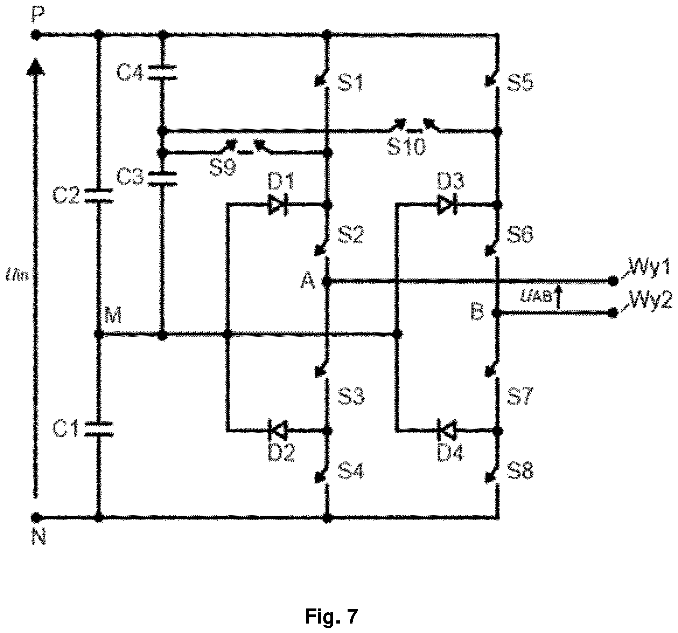

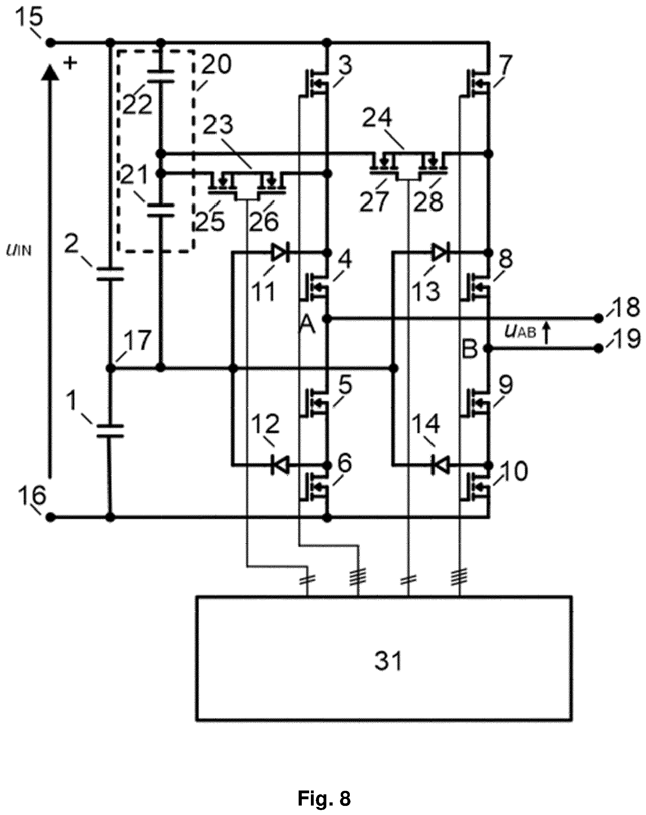

The subject of the invention is shown in embodiments in the drawing in which fig. 1 is a simplified schematic diagram of a multilevel inverter according to the invention in a basic first version modifying a single-phase NPC inverter topology, fig.2 is a schematic diagram of the multilevel inverter according to the invention in the basic first version, fig.3 is a simplified schematic diagram of the multilevel inverter according to the invention in a second version, fig.4 is a schematic diagram of the multilevel inverter according to the invention in the second version, fig. 5 is a simplified schematic diagram of the multilevel inverter according to the invention in a third version, fig.6 is a schematic diagram of the multilevel inverter according to the invention in the third version, fig.7 is a simplified schematic diagram of the multilevel inverter according to the invention in a fourth version, fig.8 is a schematic diagram of the multilevel inverter in the fourth version, whereas fig. 9 is a simplified schematic diagram of the single-phase multilevel inverter in the first version, where bidirectional switches have been replaced by dual-gate GaN transistors.

The inverter according to the invention improves operation of the single-phase NPC (Neutral Point Clamped) inverter, which is one of the most commonly used industrially power electronic systems used in inverter and rectifier systems. The diode-clamped NPC, in its classic solution, uses 4 transistors and 2 diodes in one leg, allowing to modulate alternating voltage on 3 levels. The diode-clamped NPC, in its classic solution, is composed of an input capacitive divider constituting a serial connection of capacitors C1 and C2, which is arranged between a positive terminal of input voltage U_{IN} and a negative input terminal of the supply voltage U_{IN}.

To the positive input terminal of the supply voltage Uᵢₙ a drain of a first transistor of a first leg of the system is connected, a source of the first transistor is connected to a drain of a second transistor whose source is connected to a drain of a third transistor whose source is connected to a drain of a fourth transistor, whose source is connected to the negative input pole of the supply voltage Uᵢₙ. To a common connection point of the first and second transistor of the first leg of the system a cathode of a diode D1 is connected, and to a common connection point of the third and fourth transistor of the first leg of the system an anode of a diode D2 is connected, whose cathode is connected to an anode of the diode D1 and a common connection point of the capacitors C1 and C2 of the input voltage divider.

The modification of a classic solution of the diode-clamped NPS system has been implemented by adding an additional system composed of a capacitive divider constituting a serial connection of capacitors C3 and C4 and two legs, each including one bidirectional controlled switch (S9 and S10), that connect a common connection point of the capacitors C3 and C4 to individual phase legs of the NPC inverter.

The inverter according to the invention is implemented in four versions. In a first and a second version, the capacitive divider of the additional system replaces one of the capacitors of the input divider of the NPC inverter, and in a third and a fourth version it is connected in parallel to one of the capacitors of the input divider of the NPC inverter.

In the first version, the additional capacitive divider composed of the capacitors C3 and C4 is arranged in the leg of the input capacitive divider in place of the capacitor C1, and to the common connection point of switches S3 and S4 of the first leg of the system and to the common connection point of the capacitors C3 and C4 a leg is connected that includes the bidirectional controlled switch S9. A common connection point of switches S2 and S3 is the point, to which an external alternating voltage circuit is connected.

A second leg of the converter is made of similarly connected elements as the first leg and is connected to the input capacitors C1, C2, C3 and C4 just like the elements in the first leg.

When controlling the system, the possibility is used to connect an output point of a given leg of the positive pole of the supply voltage U_{IN} or of the negative pole of the supply voltage U_{IN}, to the connection point of the capacitors C1 and C2, and to the connection point of the capacitors C3 and C4, wherein in the connection point of the capacitors C1 and C2, in the ideal case, a voltage is present which is equal to half the supply voltage in relation to the negative pole of the supply voltage U_{IN}, and in the connection point of the capacitors C3 and C4, in the ideal case, a voltage is present which is equal to one quarter of the supply voltage in relation to the negative pole of the supply voltage U_{IN}.

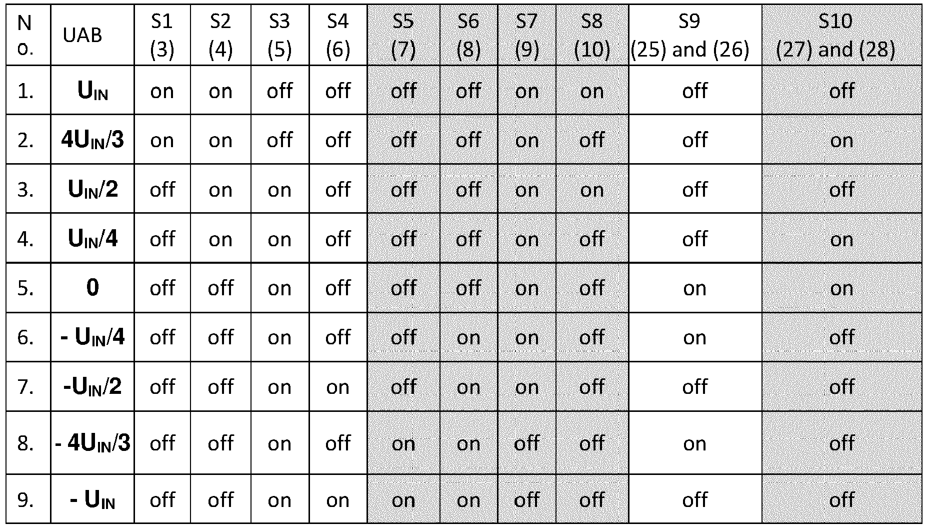

In order to obtain 9 levels of output voltage between phases A and B for the first version, the system switches must assume states indicated in the above table, wherein output voltages having values U_{IN}/2, U_{IN}/4, 0, -U_{IN}/2 i -U_{IN}/4 can also be obtained in other combinations of transistor states.

The output circuit of each phase can be connected to the input voltage at levels 0, U_{IN}/4, U_{IN}/2 and U_{IN}, measured in relation to the negative pole of the supply voltage. The voltage between the phases of the system, which is the voltage difference of two legs of the system, can take values: Uᵢₙ, 4Uᵢₙ/3, Uᵢₙ/2, Uᵢₙ/4, 0, - Uᵢₙ/4, - Uᵢₙ/2, -4 Uᵢₙ/3, -Uᵢₙ, that is, at 9 levels.

In a first embodiment of the system, the converter operates at DC voltage U_{IN}=560 V and is made of superjunction transistors with *V*_{DS}=600V, and ultrafast diodes with a blocking voltage of 600 V. Input capacitive dividers are implemented using electrolytic capacitors connected in parallel with polypropylene capacitors. Output voltage modulation is performed with a frequency of 50 kHz by selecting suitable transistors and turn-on time thereof in the pulse repetition period according to the principle of pulse-width modulation, which is implemented in a control unit 31 built on the basis of the FPGA system (Field Programmable Gate Array).

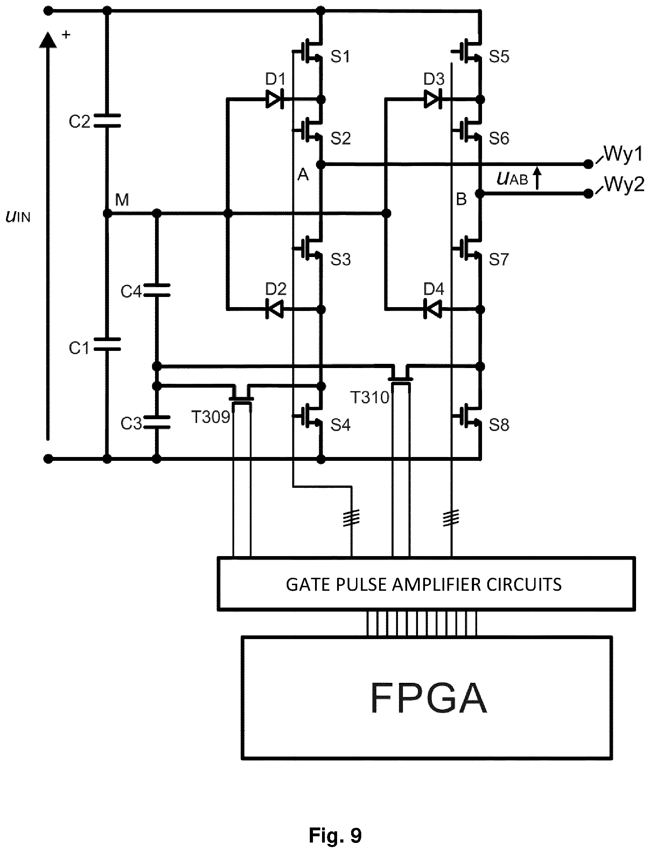

In a second embodiment, the converter operates according to the scheme presented in fig. 9, with the values of input voltages and capacitances as in the first embodiment and is composed of gallium nitride (GaN) transistors with VDS=600 V serving as the switches 3 - 10 and dual-gate GaN transistors serving as the elements 22 - 23, and ultrafast diodes. Output voltage modulation is performed with a frequency of 100 kHz by selecting suitable transistors and turn-on time thereof in the pulse repetition period according to the principle of pulse-width modulation, which is implemented in the control unit 31 built on the basis of the FPGA system. Between the FPGA and the controlled transistors of the multilevel inverter system a gate pulse amplifier module is arranged, and gates of the dual-gate GaN transistors are connected to the external circuits independently.

In a third embodiment, the converter operates at DC voltage U_{IN}=560 V. At its input it has a capacitive divider comprised of capacitors 1 and 2, and a second additional divider comprised of capacitors 21 and 22 connected in parallel to the capacitor 2, wherein each element of the capacitive dividers is made of electrolytic capacitors connected in parallel with polypropylene capacitors, made of superjunction transistors with *V*_{DS}=600V, and ultrafast diodes with a blocking voltage of 600 V. Input capacitive dividers are implemented using electrolytic capacitors connected in parallel with polypropylene capacitors. Output voltage modulation is performed with a frequency of 50 kHz by selecting suitable transistors and turn-on time thereof in the pulse repetition period according to the principle of pulse-width modulation, which is implemented in a control unit 31 built on the basis of the FPGA system.

In a fourth embodiment, the converter operates at DC voltage U_{IN}=560 V, has at its input capacitive divider comprised of capacitors 1 and 2, and a second additional divider comprised of capacitors 21 and 22 connected in parallel to the capacitor 1, wherein each element of the capacitive dividers is made of electrolytic capacitors connected in parallel with polypropylene capacitors, made of superjunction transistors with *V*_{DS}=600V, and ultrafast diodes with a blocking voltage of 600 V. Input capacitive dividers are implemented using electrolytic capacitors connected in parallel with polypropylene capacitors. Output voltage modulation is performed with a frequency of 50 kHz by selecting suitable transistors and turn-on time thereof in the pulse repetition period according to the principle of pulse-width modulation, which is implemented in a control unit 31 built on the basis of the FPGA system.

## Claims

1. A multilevel single-phase diode-clamped voltage inverter having a minimized number of transistors, with two phases, comprising a DC intermediate circuit comprising at least a first and a second capacitor (1) and (2) that constitute an input capacitive divider arranged between a positive input terminal (15) and a negative input terminal (16), and two circuits for generating a single phase of alternating voltage, each composed of two legs, a first main leg including four controlled switches and a second additional leg containing two clamping diodes, wherein the first main leg of a first circuit, consisting of a serial connection of four controlled electronic switches (3), (4), (5) and (6) is arranged between the positive input terminal (15) and the negative input terminal (16) of input voltage U_{IN}, wherein the additional leg constituting a serial connection of clamping diodes (11) and (12) is arranged in such a way that a cathode of the diode (11) is connected to a connection point of the controlled electronic switches (3) and (4), and an anode of the diode (12) is connected to a connection point of the controlled electronic switches (5) and (6), wherein a connection point of an anode of the diode (11) and a cathode of the diode (12) is connected to a middle point (17) of the constant voltage intermediate circuit, located between the capacitors (1) and (2) of the input divider, and a connection point A of the controlled electronic switches (4) and (5) is connected to an output terminal (18), whereas a second circuit for generating alternating voltage has an identical topology as the first circuit, wherein the main leg of the second circuit is constituted by, respectively, a serial connection of four controlled electronic switches (7), (8), (9) and (10), the the additional leg is constituted by a serial connection of clamping diodes (13) and (14), whereas an output terminal (19) is connected to a point B constituting a connection of the controlled electronic switches (8) and (9), wherein the switches of the inverter are controlled by means of a central control unit (31) **characterized in that** an additional capacitive divider, which is constituted by capacitors (21) and (22) connected in series, is arranged in series with the input capacitor (2) between the negative input terminal (16) of the input voltage U_{IN} and the middle point (17) of the constant voltage intermediate circuit, located at a connection point of a negative output of the capacitor (2) and a positive input of the capacitor (22), wherein a negative output of the capacitor (21) included in the additional capacitive divider is connected to the negative input terminal (16), constituting the negative input terminal of the supply voltage U_{IN}, and a positive input of the capacitor (21) is connected to a negative input of the capacitor (22), the positive input of which is connected to the negative output of the capacitor (2), constituting the middle point (17) of the constant voltage intermediate circuit, wherein two additional horizontal legs, each containing one bidirectional controlled switch (23) and (24), connect a connection point of the capacitors (21) and (22) to each leg of the single-phase three-level NPC-type inverter, so that the connection point of the capacitors (21) and (22) is connected to the connection point of the switches (5) and (6) and the cathode of the diode (12) through a first horizontal leg containing the bidirectional switch (23) composed of transistors (25) and (26), and to a connection point of the switches (9) and (10) and a cathode of the diode (14) through a second horizontal leg containing the bidirectional switch (24) composed of transistors (27) and (28).

2. The multilevel single-phase inverter according to claim 1 **characterized in that** the additional capacitive divider, which is constituted by the capacitors (21) and (22) connected in series, is arranged in series with the input capacitor (1) between the positive input terminal (15) of the input voltage U_{IN} and the middle point (17) of the constant voltage intermediate circuit located at a connection point of the negative output of the capacitor (21) and a positive input of the capacitor (1), whereas the two additional horizontal legs, each containing one bidirectional switch (23) and (24), connect the connection point of the capacitors (21) and (22) to the legs of the single-phase three-level NPC-type inverter, wherein the positive input of the capacitor (22) included in the additional capacitive divider is connected to the positive input terminal (15) of the supply voltage U_{IN}, and the negative input of the capacitor (22) is connected to the positive input of the capacitor (21), the negative input of which is connected to a positive output of the capacitor (1), constituting the middle point (17) of the constant voltage intermediate circuit, whereas the connection point of the capacitors (21) and (22) is connected to the connection point of the switches (3) and (4) and the cathode of the diode (11) through the first horizontal leg containing the bidirectional switch (23) composed of the transistors (25) and (26), and to the connection point of the switches (7) and (8) and a cathode of the diode (13) through the second horizontal leg containing the bidirectional switch (24) composed of the transistors (27) and (28).

3. The multilevel single-phase inverter according to claim 1 **characterized in that** the additional capacitive divider, which is constituted by the capacitors (21) and (22) connected in series, is arranged in parallel with the input capacitor (1) between the middle point (17) of the constant voltage intermediate circuit located between the capacities (1) and (2) and the negative input terminal (16) of the supply voltage U_{IN}, wherein the positive input of the capacitor (21) is connected to the middle point (17) of the constant voltage intermediate circuit, and the positive input of the capacitor (22) is connected to the negative input of the capacitor (21), while the negative input thereof is connected to the negative input terminal (16) of the supply voltage U_{IN}, whereas the two additional horizontal legs, each containing one bidirectional switch (23) and (24), connect the connection point of the capacitors (21) and (22) to the legs of the single-phase three-level NPC-type inverter, so that the connection point of the capacitors (21) and (22) is connected to the connection point of the switches (5) and (6) and the anode of the diode (12) through the first horizontal leg containing the bidirectional switch (23) composed of the transistors (25) and (26), and to the connection point of the switches (9) and (10) and the anode of the diode (14) through the second horizontal leg containing the bidirectional switch (24) composed of the transistors (27) and (28).

4. The multilevel single-phase inverter according to claim 1 **characterized in that** the additional capacitive divider, which is constituted by the capacitors (21) and (22) connected in series, is arranged in parallel with the input capacitor (2) between the middle point (17) of the constant voltage intermediate circuit located between the capacities (1) and (2) and the positive input terminal (15) of the supply voltage U_{IN}, wherein the positive input of the capacitor (22) is connected to the positive input terminal (15) of the supply voltage U_{IN}, and the negative input of the capacitor (22) is connected to the positive input of the capacitor (21), the negative input of which is connected to the middle point (17) of the constant voltage intermediate circuit, whereas two legs, each containing one bidirectional switch (23) and (24) connect the connection point of the capacitors (21) and (22) to the legs of the single-phase three-level NPC-type inverter, so that the connection point of the capacitors (21) and (22) is connected to the connection point of the switches (4) and (5) and the cathode of the diode (11) through the first horizontal leg containing the bidirectional switch (23) composed of the transistors (25) and (26), and to the connection point of the switches (7) and (8) and a cathode of the diode (13) through the second horizontal leg containing the bidirectional switch (24) composed of the transistors (27) and (28).

5. The multilevel single-phase inverter according to claim 1 **characterized in that** each of the bidirectional switches (23) and (24) is constituted by a set of two transistors, the transistors (25) and (26) in the switch (23), and the transistors (27) and (28) in the switch (24), respectively, connected oppositely by connecting sources of both transistors of each set, in case of using MOSFET or GaN transistors, whereas an input of each of the bidirectional switches is a drain of a first transistor, and an output of a switch is a drain of a second transistor of a set, or connected oppositely by connecting emitters of both transistors of each set, in case of using IGBT transistors, whereas an input of each of the bidirectional switches is a collector of a first transistor, and an output of a switch is a collector of a second transistor of a set.

6. The multilevel inverter according to claim 1 and 5 **characterized in that** each of the bidirectional switches (23) and (24) is a dual-gate GaN transistor, capable of bidirectional conduction and blocking, (29) and (30) respectively.
